# EUROPEAN PATENT APPLICATION

(11) **EP 2 770 410 A2**
(43) Date of publication of application: **27.08.2014**
(21) Application number: 14156393.2
(22) Date of filing: 24.02.2014
(51) Int. Cl.: G06F 3/041

(54) **Method for determining touch input object and electronic device thereof**

(30) Priority: 25.02.2013 KR 20130020169
(71) Applicant: Samsung Electronics Co., Ltd., Suwon-si Gyeonggi-do 443-742 (KR)
(72) Inventor: Heo, Hoon-Do, Gyeonggi-do (KR); Kim, Moon-Soo, Seoul (KR); Park, Jae-Wook, Gyeonggi-do (KR); Park, Jae-Hyung, 443-742 Gyeonggi-do (KR); Park, Jong-Dae, Seoul (KR); Lee, Heon-Seok, Gyeonggi-do (KR)
(74) Representative: Birchenough, Lewis

(57) **Abstract**

A method for determining a touch input object in a touchscreen based portable electronic device is provided. The method includes detecting a touch, and determining the touch input object based on two or more of a touch sensitivity, a touched area, and a touch duration time for the detected touch.

## Description

### TECHNICAL FIELD

The present disclosure relates to an apparatus and a method for determining a touch input object and an electronic device thereof. More particularly, the present disclosure relates to a method for determining a touch input object based on touch information in a touchscreen based the electronic device.

### BACKGROUND

As the usage of multimedia services using portable electronic devices increases, the amount of information to be processed and the amount of information to be displayed have increased. Accordingly, there is a growing interest in portable electronic devices having a touchscreen in which the space thereof is efficiently utilized and the size of the display unit thereof is increased.

A touchscreen is an input/output device for performing an input and display of information on one screen. Accordingly, a touchscreen based portable electronic device does not need a separate input device, such as a keypad, resulting in an increased display area.

However, since touchscreen based portable electronic devices do not include a separate input device, their form of manipulation is different from that of portable electronic devices having a separate input device. Furthermore, touchscreen based portable electronic devices may display a greater amount of information through an expanded screen on the touchscreen than a portable electronic device that does not have a touchscreen. Accordingly, touchscreen based portable electronic devices need a separate user interface for the touchscreen.

Therefore, a need exists for an apparatus and a method for determining a touch input object based on touch information in a touchscreen based portable electronic device.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages below. Accordingly, an aspect of the present disclosure is to provide an apparatus and a method for determining a touch input object in a touchscreen based electronic device.

Another aspect of the present disclosure is to provide an apparatus and a method for determining a touch input object based on touch information in a touchscreen based electronic device.

Another aspect of the present disclosure is to provide an apparatus and a method for determining a touch input object based on two or more of a touch sensitivity, a touched area and a touch duration time in a touchscreen based electronic device.

Another aspect of the present disclosure is to provide an apparatus and a method for identifying a glove touch input object based on two or more of a touch sensitivity, a touched area and a touch duration time in a touchscreen based electronic device.

Another aspect of the present disclosure is to provide an apparatus and a method for selectively using touch input objects for touch recognition according to operation modes in a touchscreen based electronic device.

In accordance with an aspect of the present disclosure, a method for determining a touch input object in a touchscreen based electronic device is provided. The method includes detecting a touch, and determining the touch input object based on two or more variables of a touch sensitivity, a touched area, and a touch duration time of the detected touch.

The touch input object may include one or more of a finger touch input object, a pen touch input object, and a glove touch input object.

The determining of the touch input object may include determining the glove touch input object as the touch input object for the touch when the touch sensitivity is greater than a first reference sensitivity and less than a second reference sensitivity, and when the touched area for the touch is greater than a first reference area and less than a second reference area. The second reference sensitivity may be greater than the first reference sensitivity, and the second reference area may be greater than the first reference area.

In accordance with another aspect of the present disclosure, a method for determining a touch input object in a touchscreen based electronic device is provided. The method includes detecting a touch, and determining the touch input object based on two or more of a touch sensitivity, a touched area, and a touch duration time for the detected touch, and recognizing a touch input according to the detected touch based on the touch input object and an operation mode of the electronic device.

The recognizing of the touch input may include detecting the touch input for the detected touch when the touch input object is included in the touch input object for the operation mode, and restricting the touch input for the detected touch when the touch input object is not included in the touch input object for the operation mode.

In accordance with another aspect of the present disclosure, an electronic device is provided. The electronic device includes a touchscreen, and at least one processor, wherein the at least one processor is configured to determine a touch input object based on two or more of a touch sensitivity, a touched area, and a touch duration time of a touch when the touch is detected through the touchscreen.

The touch input object may include one or more of a finger touch input object, a pen touch input object, and a glove touch input object.

The at least one processor may be further configured to determine the glove touch input object as the touch input object for the touch when the touch sensitivity is greater than a first reference sensitivity and less than a second reference sensitivity, and when the touched area for the touch is greater than a first reference area and less than a second reference area. The second reference sensitivity may be greater than the first reference sensitivity, and the second reference area may be greater than the first reference area.

In accordance with another aspect of the present disclosure, an electronic device is provided. The electronic device includes a touchscreen, and at least one processor, wherein the at least one processor is configured to determine a touch input object based on two or more of a touch sensitivity, a touched area, and a touch duration time for a touch when the touch is detected through the touchscreen and to recognize a touch input according to the detected touch based on the touch input object and an operation mode of the electronic device.

The at least one processor may be further configured to detect the touch input for the detected touch when the touch input object is included in the touch input object for the operation mode and restrict the touch input for the detected touch when the touch input object is not included in the touch input object for the operation mode.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIGS. 1A, 1B, and 1C illustrate touch information in a touchscreen based portable electronic device according to a glove touch of the electronic device according to an embodiment of the present disclosure;
FIG. 2 illustrates a block configuration of an electronic device according to an embodiment of the present disclosure;
FIG. 3 illustrates a block configuration of a processor according to an embodiment of the present disclosure;
FIG. 4 is a flowchart illustrating a process of determining a touch input object in a touchscreen based electronic device according to an embodiment of the present disclosure;
FIG. 5 is a flowchart illustrating a process of determining a touch input object based on touch information in a touchscreen based electronic device according to a first embodiment of the present disclosure;
FIG. 6 is a flowchart illustrating a process of determining a touch input object based on touch information in a touchscreen based electronic device according to a second embodiment of the present disclosure;
FIG. 7 is a flowchart illustrating a process of recognizing a touch according to an operation mode in a touchscreen based electronic device according to the first embodiment of the present disclosure;
FIG. 8 is a flowchart illustrating a process of recognizing a touch according to an operation mode in a touchscreen based electronic device according to the second embodiment of the present disclosure; and
FIG. 9 is a flowchart illustrating a process of recognizing a touch according to an operation mode in a touchscreen based electronic device according to a third embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Various embodiments of the present disclosure provide a method for determining a touch input object in a touchscreen based electronic device. In this case, the touch input object represents an object used to touch a touch pad for inputting a command and the touch input object may include a pen touch input object, a finger touch input object, and a glove touch input object. The glove touch input object may represent a touch input object for detection of a touch using an object, such as a glove, when a finger is spaced from the touch pad.

In the following description, examples of the electronic device may include one or more of a mobile communication terminal, a Personal Digital Assistant (PDA), a laptop computer, a smart phone, a netbook, a television, a Mobile Internet Device (MID), an Ultra Mobile Personal Computer (UMPC), a tablet Personal Computer (PC), a navigation device, a Motion Pictures Expert Group (MPEG-1 or MPEG-2) Audio Layer 3 (MP3) player, and the like.

The electronic device may determine a touch input object based on touch information including one or more of a touch sensitivity, a touched area, and a touch duration time.

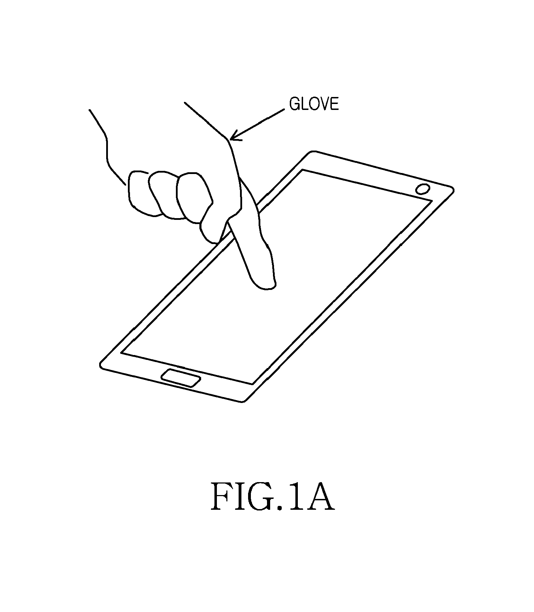

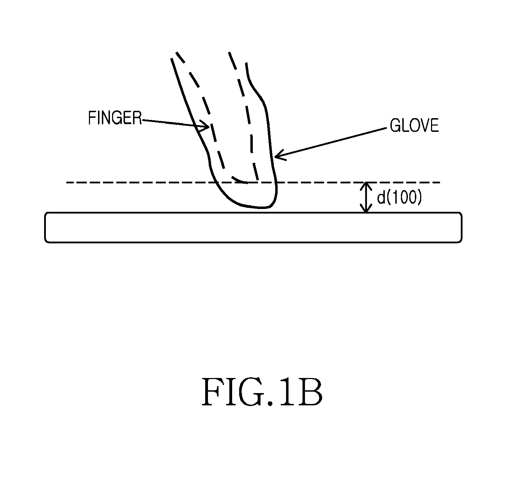

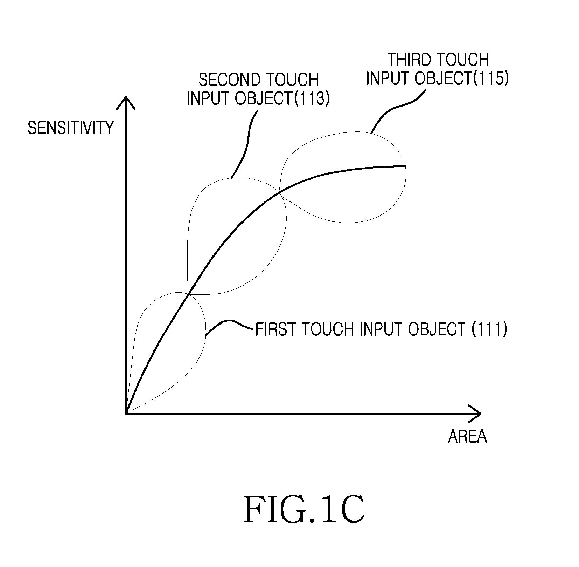

FIGS. 1A, 1B, and 1C illustrate touch information in a touchscreen based portable electronic device according to a glove touch of the electronic device according to an embodiment of the present disclosure.

Referring to FIGS. 1A, 1B, and 1C, when a user wearing a glove touches a touch pad as illustrated in FIG. 1A, the electronic device may recognize a different touch sensitivity and a different touched area from those of a touch made by a touch pen or a finger due to a spaced distance 100 between the finger and the touch pad according to the glove as illustrated in FIG. 1B. In order words, since the touch sensitivity and touched area of the touch detected by the electronic device when the glove is worn (that is, a second touch input object 113) are greater than the touch sensitivity and touched area of a touch made by a touch pen (that is, a first touch input object 111) as illustrated in FIG. 1C but less than the touch sensitivity and touched area of a touch made by a finger (that is, a third touch input object 115), the electronic device may recognize a touch input object based on touch information including one or more of a touch sensitivity, a touched area, and a touch duration time. In this case, the touch sensitivity includes a change value in a capacity according to a touch on a touchpad.

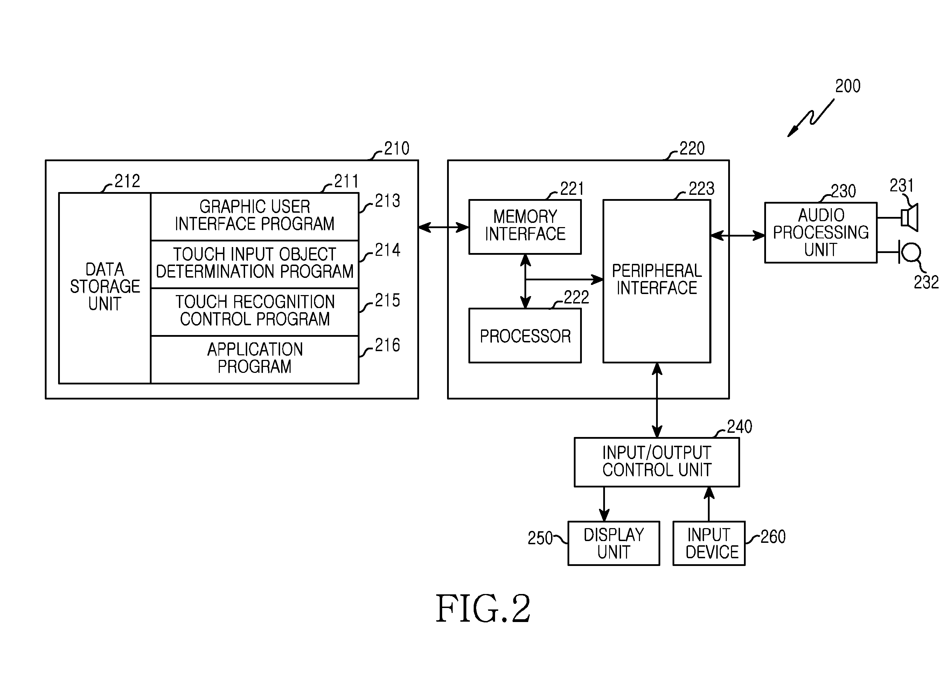

FIG. 2 illustrates a block configuration of an electronic device according to an embodiment of the present disclosure.

Referring to FIG. 2, an electronic device 200 includes a memory 210, a processor unit 220, an audio processing unit 230, an input/output control unit 240, a display unit 250, and an input device 260. Herein, the memory 210 may be provided in plurality.

The memory 210 may include a program storage unit 211 for storing a program for controlling an operation of the electronic device 200, and a data storage unit 212 for storing data generated during the execution of a program.

The data storage unit 212 may store variables for determination of touch input objects and information on available touch input objects for operation modes of the electronic device 200. In this case, the variables for determination of touch input objects may include two or more of at least one reference sensitivity, at least one reference area, and a reference touch time.

The program storage unit 211 includes a Graphic User Interface (GUI) program 213, a touch input object determination program 214, a touch recognition control program 215, and at least one application program 216. Herein, the program included in the program storage unit 211 is a set of instructions and may be referred to an instruction set.

The GUI program 213 may include at least one software component for providing a graphic user interface on a display unit 250. For example, the GUI program 213 may control the display of information on application programs executed by the processor 222 on the display unit 250.

The touch input object determination program 214 may include at least one software component for determining a touch input object based on touch information provided from the input device 260. In this case, the touch input object determination program 214 may recognize a touch input object for the input device 260 based on two or more of a touch sensitivity, a touched area, and a touch duration time which are provided from the input device 260. For example, when the touch sensitivity is greater than a first reference sensitivity and less than a second reference sensitivity, and when the touched area is greater than a first reference area and less than a second reference area, the touch input object determination program 214 may recognize that a detected touch is made by a glove touch input object. In addition, when a touch input state where the touch sensitivity is greater than the first reference sensitivity and less than the second reference sensitivity, and when the touched area is greater than the first reference area and less than the second reference area is maintained for a reference time, the touch input object determination program 214 may recognize that a detected touch is made by the glove touch input object.

The touch recognition control program 215 may include at least one software component for determining whether a touch is detected according to a touch input object for respective operation modes of the electronic device 200. For example, the touch recognition control program 215 may recognize a touch according to information on available touch input objects which are set for operation modes. For example, it is assumed that the electronic device 200 supports a first touch input object, a second touch input object, and a third touch input object. When the electronic device 200 is set to a first operation mode, the touch recognition control program 215 may recognize a touch by using the first touch input object and the third touch input object. For example, the touch recognition control program 215 may recognize that a touch is not detected for the touch made by the second touch input object which is determined by the touch input object determination program 214. When the electronic device 200 is set to a second operation mode, the touch recognition control program 215 may recognize a touch by using the second touch input object. For example, the touch recognition control program 215 may recognize that a touch is not detected for the touch made by the first touch input object and the third touch input object which are determined by the touch input object determination program 214.

The at least one application program 216 includes a software component for at least one application program installed in the electronic device 200.

The processor unit 220 includes a memory interface 221, at least one processor 222, and a peripheral interface 223. In this case, the memory interface 221, the at least one processor 222 and the peripheral interface 223 which are included in the processor unit 220 may be integrated into at least one integrated circuit or be implemented as separate components.

The memory interface 221 controls access to the memory 210 of components, such as the at least one processor 222 or the peripheral interface 223.

The peripheral interface 223 controls connections of the input/output peripherals of the electronic device 200 to the at least one processor 222 and the memory interface 221.

The at least one processor 222 enables the electronic device 200 to provide various multimedia services using at least one software program. In this case, the at least one processor 222 may execute at least one program stored in the memory unit 210 to provide a service corresponding to the program.

The audio processing unit 230 provides an audio interface between a user and the electronic device 200 through a speaker 231 and a microphone 232.

The input/output control unit 240 provides an interface between an input/output device, such as the display unit 250 and the input device 260, and the peripheral interface 223.

The display unit 250 displays the state information of the electronic device 200, characters input by the user, moving pictures, still pictures, and the like. For example, the display unit 250 displays information about application programs executed by the at least one processor 222.

The input device 260 provides input data generated by the selection of the user to the processor unit 220 through the input/output control unit 240. In this case, the input device 260 includes a keypad including at least one hardware button, a touch pad for detecting touch information, and the like. For example, the input device 260 provides touch information, made by one or more of a touch pen, a finger, and a glove worn on a finger on the touch pad, to the at least one processor 222 through the input/output control unit 240.

Although not shown in the drawings, the electronic device 200 may further include a communication system for performing communication functions for voice communication and data communication. In this case, the communication system may be classified into a plurality of communication sub-modules which support different communication networks. For example, the communication networks may include, but are not limited to, a Global System for Mobile communication (GSM) network, an Enhanced Data GSM Environment (EDGE) network, a Code Division Multiple Access (CDMA) network, a W-Code Division Multiple Access (W-CDMA) network, a Long Term Evolution (LTE) network, an Orthogonal Frequency Division Multiple Access (OFDMA) network, a wireless LAN, a Bluetooth network, a Near Field Communication (NFC) network, and the like.

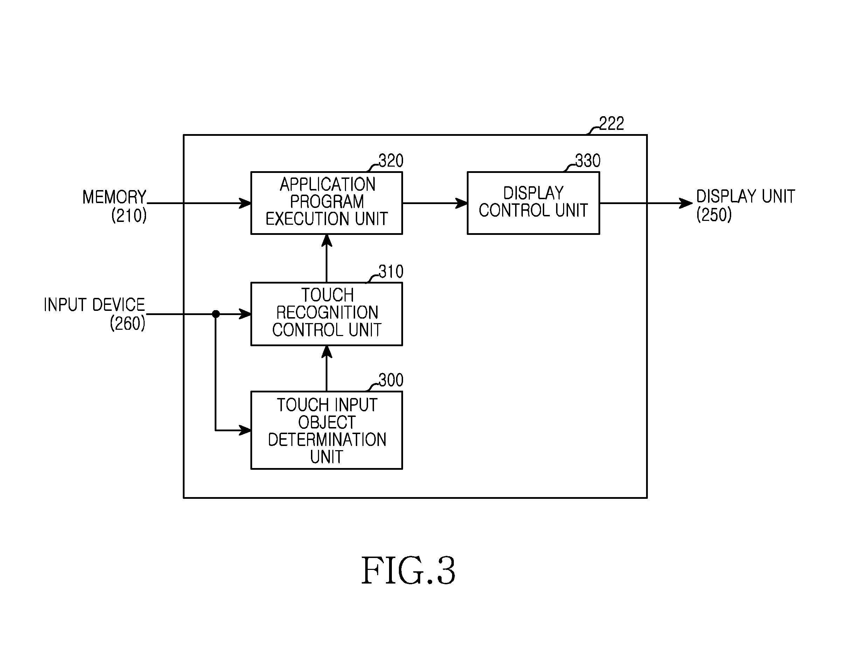

FIG. 3 illustrates a block configuration of a processor according to an embodiment of the present disclosure.

Referring to FIG. 3, the at least one processor 222 includes a touch input object determination unit 300, a touch recognition control unit 310, an application program execution unit 320, and a display control unit 330.

The touch input object determination unit 300 may determine a touch input object based on touch information. In this case, the touch input object determination unit 300 may execute the touch input object determination program 214 stored in the program storage unit 211 to determine a touch input object based on touch information. The touch input object determination unit 300 may recognize a touch input object for the input device 260 based on two or more of a touch sensitivity, a touched area, and a touch duration time which are provided from the input device 260. For example, when the touch sensitivity is greater than a first reference sensitivity and less than a second reference sensitivity, and when the touched area is greater than a first reference area and less than a second reference area, the touch input object determination unit 300 may recognize that a detected touch is made by a glove touch input object. In addition, when the touch input state, where the touch sensitivity is greater than the first reference sensitivity and less than the second reference sensitivity and when the touched area is greater than the first reference area and less than the second reference area, is maintained for a reference time period, the touch input object determination unit 300 may recognize that the detected touch is made by a glove touch input object.

The touch recognition control unit 310 may determine whether a touch is detected according to touch input objects for respective operation modes of the electronic device 200. In this case, the touch recognition control unit 310 executes the touch recognition control program 215 stored in the program storage unit 211 to determine whether a touch is detected according to touch input objects for respective operation modes of the electronic device 200. For example, the touch recognition control unit 310 may recognize a touch according to information on available touch input objects which are set for operation modes. For example, it is assumed that the electronic device 200 supports a first touch input object, a second touch input object, and a third touch input object. When the electronic device 200 is set to a first operation mode, the touch recognition control unit 310 may recognize a touch by using the first touch input object and the third touch input object. For example, the touch recognition control unit 310 may recognize that a touch is not detected with respect to a touch made by the second touch input object determined by the touch input object determination unit 300. When the electronic device 200 is set to a second operation mode, the touch recognition control unit 310 may recognize a touch using the second touch input object. For example, the touch recognition control unit 310 may recognize that a touch is not detected with respect to a touch made by the first touch input object and the third touch input object determined by the touch input object determination unit 300.

The application program execution unit 320 executes the at least one application program 216 stored in the program storage unit 211 to provide a service corresponding to the program. In this case, the application program execution unit 320 may execute an application program according to touch information provided from the touch recognition control unit 310.

The display control unit 330 may display a graphic user interface on the display unit 250. In this case, the display control unit 330 may execute the GUI program 213 stored in the program storage unit 211 to display the graphic user interface on the display unit 250. For example, the display control unit 330 displays information on an application program that is executed by the application program execution unit 320 on the display unit 250.

In an embodiment of the present disclosure, the at least one processor 222 may be configured to include a component for selectively using touch input objects for touch recognition as illustrated in FIG. 3 as a separate module.

In another embodiment of the present disclosure, the processor 220 may selectively use touch input objects for touch recognition for one module.

In another embodiment of the present disclosure, the electronic device 200 may include a separate control module for selectively using touch input objects for touch recognition.

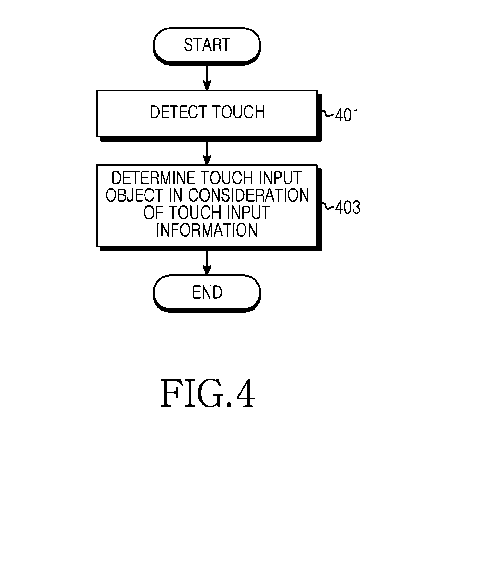

FIG. 4 is a flowchart illustrating a process of determining a touch input object in a touchscreen based electronic device according to an embodiment of the present disclosure.

Referring to FIG. 4, in operation 401, the electronic device detects a touch. For example, the electronic device may detect a touch based on a change in the capacity of a touchpad included in the input device 160.

When the touch is detected, the electronic device may determine a touch input object based on touch information in operation 403. For example, the electronic device may determine a touch input object based on two or more of a touch sensitivity, a touched area, and a touch duration time.

As described above, the electronic device may determine a touch input object based on two or more of a touch sensitivity, a touched area, and a touch duration time. Accordingly, the electronic device may be configured to include a unit for detecting a touch and a touch input object determination unit for determining a touch input object based on two or more of a touch sensitivity, a touched area, and a touch duration time.

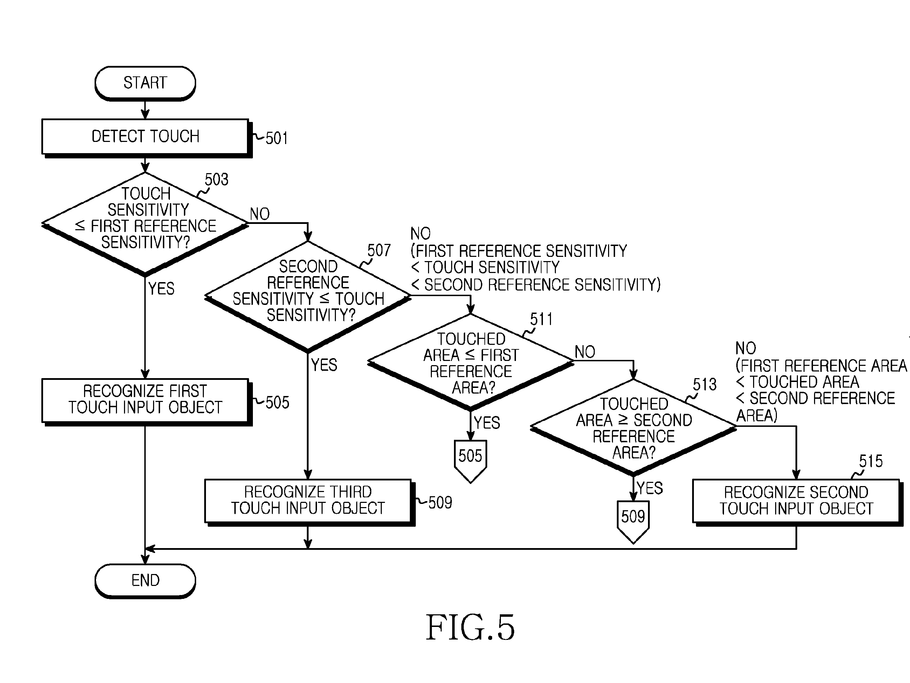

FIG. 5 is a flowchart illustrating a process of determining a touch input object based on touch information in a touchscreen based electronic device according to a first embodiment of the present disclosure.

Referring to FIG. 5, in operation 501, the electronic device detects a touch. For example, the electronic device may detect a touch based on a change in the capacity of a touchpad included in the input device 160.

In operation 503, the electronic device identifies whether a touch sensitivity is less than or equal to a first reference sensitivity. In this case, the touch sensitivity includes the sensitivity of the touch detected in operation 501.

When it is determined in operation 503 that the touch sensitivity is less than or equal to the first reference sensitivity, the electronic device may recognize that the detected touch is made by a first touch input object in operation 505. For example, when the touch sensitivity is less than or equal to the first reference sensitivity, the electronic device may recognize that the detected touch is made by a pen touch input object.

When it is determined in operation 503 that the touch sensitivity is greater than the first reference sensitivity, the electronic device identifies whether the touch sensitivity is greater than or equal to a second reference sensitivity in operation 507. In this case, the second reference sensitivity is greater than the first reference sensitivity.

When it is determined in operation 507 that the touch sensitivity is greater than or equal to the second reference sensitivity in operation 507, the electronic device may recognize that the detected touch is made by a third touch input object in operation 509. For example, when the touch sensitivity is greater than or equal to the second reference sensitivity, the electronic device may recognize that the detected touch is made by a finger touch input object.

When it is determined in operation 507 that the touch sensitivity is greater than the first reference sensitivity and less than the second reference sensitivity, the electronic device identifies whether a touched area is less than or equal to a first reference area in operation 511. In this case, the touched area includes the area of the touch detected in operation 501.

When it is determined in operation 511 that the touched area is less than or equal to the first reference area, the electronic device may recognize that the detected touch is made by the first touch input object in operation 505. For example, when the touched area is less than or equal to the first reference area, the electronic device may recognize that the detected touch is made by a pen touch input object.

When it is determined in operation 511 that the touched area is greater than the first reference area, the electronic device identifies whether the touched area is greater than or equal to a second reference area in operation 513. In this case, the second reference area is greater than the first reference area.

When it is determined in operation 513 that the touched area is greater than or equal to the second reference area, the electronic device may recognize that the detected touch is made by the third touch input object in operation 509. For example, when the touched area is greater than or equal to the second reference area, the electronic device may recognize that the detected touch is made by the finger touch input object.

When it is determined in operation 513 that the touched area is greater than the first reference area and less than the second reference area, the electronic device may recognize that the detected touch is made by a second touch input object in operation 515. When the touched area is greater than the first reference area and less than the second reference area, the electronic device may recognize that the detected touch is made by a glove touch input object.

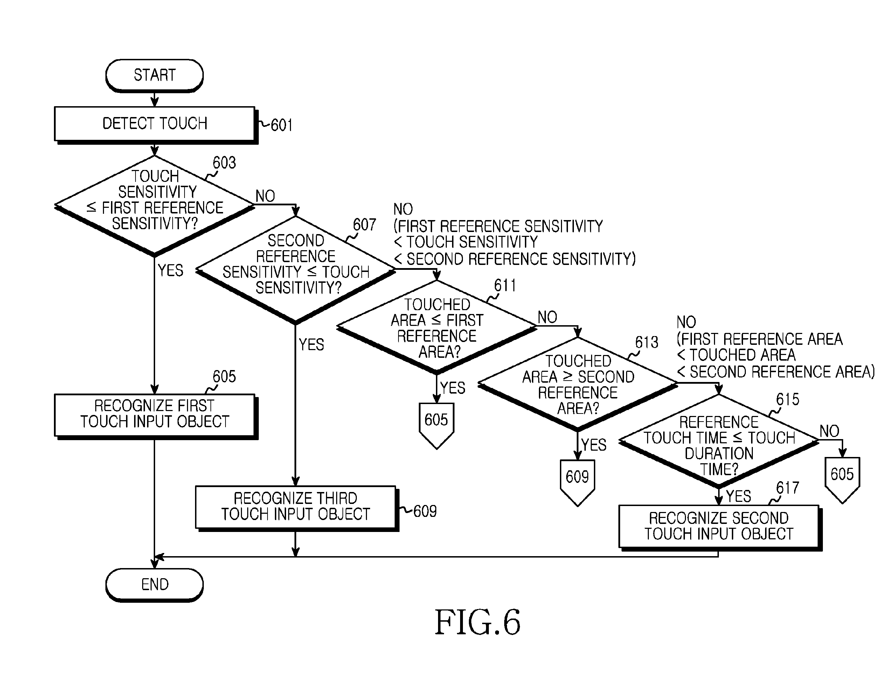

FIG. 6 is a flowchart illustrating a process of determining a touch input object based on touch information in a touchscreen based electronic device according to a second embodiment of the present disclosure.

Referring to FIG. 6, in operation 601, the electronic device detects a touch. For example, the electronic device may detect a touch based on a change in the capacity of a touchpad included in the input device 160.

In operation 603, the electronic device identifies whether a touch sensitivity is less than or equal to a first reference sensitivity. In this case, the touch sensitivity includes the sensitivity of the touch detected in operation 601.

When it is determined in operation 603 that the touch sensitivity is less than or equal to the first reference sensitivity, the electronic device may recognize that the detected touch is made by a first touch input object in operation 605. For example, when the touch sensitivity is less than or equal to the first reference sensitivity, the electronic device may recognize that the detected touch is made by a pen touch input object.

When it is determined in operation 603 that the touch sensitivity is greater than the first reference sensitivity, the electronic device identifies whether the touch sensitivity is greater than or equal to a second reference sensitivity in operation 607. In this case, the second reference sensitivity is greater than the first reference sensitivity.

When it is determined in operation 607 that the touch sensitivity is greater than or equal to the second reference sensitivity, the electronic device may recognize that the detected touch is made by a third touch input object in operation 609. For example, when the touch sensitivity is greater than or equal to the second reference sensitivity, the electronic device may recognize that the detected touch is made by a finger touch input object.

When it is determined in operation 607 that the touch sensitivity is greater than the first reference sensitivity and less than the second reference sensitivity, the electronic device identifies whether a touched area is less than or equal to a first reference area in operation 611. In this case, the touched area includes the area of the touch detected in operation 601.

When it is determined in operation 611 that the touched area is less than or equal to the first reference area, the electronic device may recognize that the detected touch is made by the first touch input object in operation 605. For example, when the touched area is less than or equal to the first reference area, the electronic device may recognize that the detected touch is made by a pen touch input object.

When it is determined in operation 611 that the touched area is greater than the first reference area, the electronic device identifies whether the touched area is greater than or equal to a second reference area in operation 613. In this case, the second reference area is greater than the first reference area.

When it is determined in operation 613 that the touched area is greater than or equal to the second reference area, the electronic device may recognize that the detected touch is made by the third touch input object in operation 609. For example, when the touched area is greater than or equal to the second reference area, the electronic device may recognize that the detected touch is made by the finger touch input object.

When it is determined in operation 613 that the touched area is greater than the first reference area and less than the second reference area, the electronic device identifies whether the touch of which the touch sensitivity lager than the first reference sensitivity and less than the second reference sensitivity and of which the touched area is greater than the first reference area and less than the second reference area is detected continuously for a reference touch time in operation 615.

When the touch of which the touch sensitivity lager than the first reference sensitivity and less than the second reference sensitivity and of which the touched area is greater than the first reference area and less than the second reference area is not detected continuously for the reference touch time, the electronic device may recognize that the detected touch is made by the first touch input object. For example, the electronic device may recognize that the detected touch is made by the pen touch input object.

When it is determined in operation 615 that the touch of which the touch sensitivity lager than the first reference sensitivity and less than the second reference sensitivity and of which the touched area is greater than the first reference area and less than the second reference area is detected continuously for the reference touch time, the electronic device may recognize that the detected touch is made by a second touch input object in operation 617. For example, the electronic device may recognize that the detected touch is made by a glove touch input object.

In an embodiment of the present disclosure, the electronic device may determine a touch input object using the touch sensitivity and the touched area or using the touch sensitivity, the touched area, and the touch duration time.

In another embodiment of the present disclosure, the electronic device may determine a touch input object using the touch sensitivity and the touch duration time. For example, when the touch sensitivity is greater than the first reference sensitivity and less than the second reference sensitivity, the electronic device identifies whether the touch, of which the touch sensitivity is greater than the first reference sensitivity and less than the second reference sensitivity, is maintained for the reference touch time. When the touch, of which the touch sensitivity is greater than the first reference sensitivity and less than the second reference sensitivity, is not detected continuously for the reference touch time, the electronic device may recognize that the detected touch is made by the first touch input object. For example, the electronic device may recognize that the detected touch is made by the pen touch input object. When the touch, of which the touch sensitivity is greater than the first reference sensitivity and less than the second reference sensitivity, is detected continuously for the reference touch time, the electronic device may recognize that the detected touch is made by the second touch input object. For example, the electronic device may recognize that the detected touch is made by the glove touch input object.

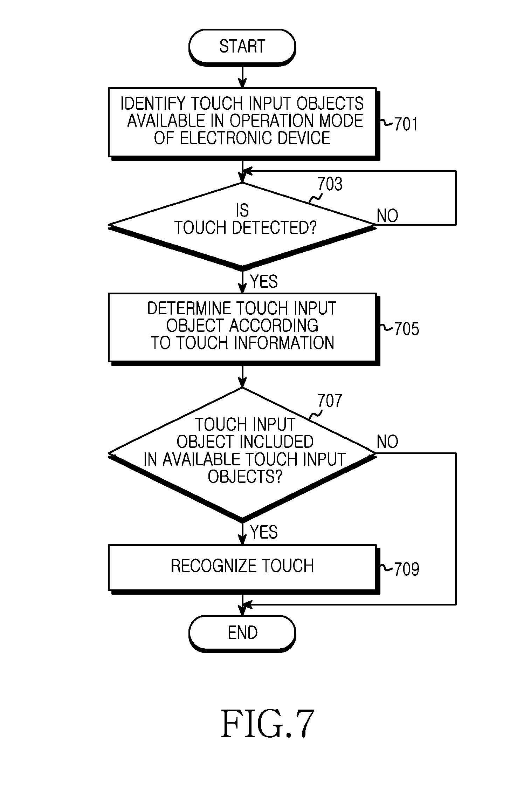

FIG. 7 is a flowchart illustrating a process of recognizing a touch according to an operation mode in a touchscreen based electronic device according to the first embodiment of the present disclosure.

Referring to FIG. 7, in operation 701, the electronic device identifies at least one touch input object which is available in an operation mode of the electronic device. For example, when the electronic device is set to a first operation mode, the electronic device may identify a glove touch input object and a pen touch input object as available touch input objects. As another example, when the electronic device is set to a second operation mode, the electronic device may identify the glove touch input object as an available touch input object.

In operation 703, the electronic device identifies whether a touch is detected. For example, the electronic device may detect a touch based on a change in the capacity of a touchpad included in the input device 160.

When it is determined in operation 703 that the touch is detected, the electronic device determines a touch input object based on touch information in operation 705. For example, the electronic device may determine a touch input object based on two or more pieces of touch information of the touch sensitivity, the touched area, and the touch duration time of the touch detected in operation 703.

In operation 707, the electronic device identifies whether the touch input object is included in the touch input objects which are available in the operation mode of the electronic device.

When it is determined in operation 707 that the touch input object is not included in the available touch input objects which are available in the operation mode of the electronic device, the electronic device recognizes that a touch is not detected.

When it is determined in operation 707 that the touch input object is included in the available touch input objects which are available in the operation mode of the electronic device, the electronic device recognizes that a touch input is detected in operation 709 according to the touch detected in operation 705.

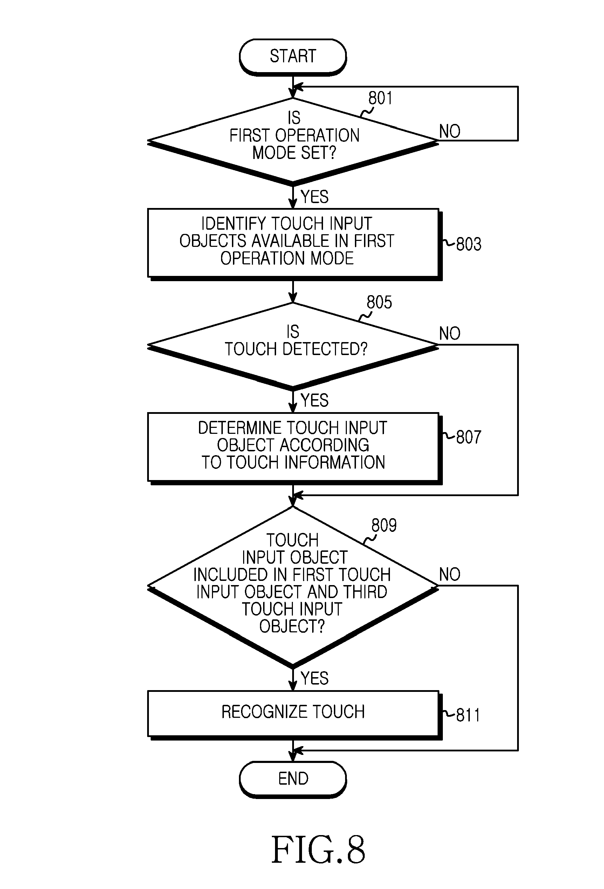

FIG. 8 is a flowchart illustrating a process of recognizing a touch according to an operation mode in a touchscreen based electronic device according to the second embodiment of the present disclosure. In the following description, it is assumed that the electronic device supports a first touch input object, a second touch input object, and a third touch input object.

Referring to FIG. 8, in operation 801, the electronic device identifies whether an operation mode of the electronic device is set to a first operation mode.

When it is determined in operation 801 that the electronic device is set to the first operation mode, the electronic device identifies at least one touch input object available in the first operation mode in operation 803. For example, when the electronic device is set to the first operation mode, the electronic device may identify a glove touch input object and a pen touch input object as available touch input object as available touch input objects.

In operation 805, the electronic device identifies whether a touch is detected. For example, the electronic device may detect a touch based on a change in the capacity of a touchpad included in the input device 160.

When it is determined in operation 805 that the touch is detected, the electronic device determines a touch input object based on touch information in operation 807. For example, the electronic device may determine a touch input object based on touch information including two or more of the touch sensitivity, the touched area, and the touch duration time of the touch detected in operation 805.

In operation 809, the electronic device identifies whether a touch input object is a first touch input object or a third touch input object which is set as an available touch input object in the first operation mode.

When the touch input object determined in operation 807 is a second touch input object, the electronic device recognizes that the touch input object for the touch detected in operation 805 is not available in the first operation mode. Accordingly, the electronic device recognizes that a touch is not detected.

When the touch input object determined in operation 807 is the first touch input object or the third touch input object, the electronic device recognizes that the touch input object for the touch detected in operation 805 is available in the first operation mode.

Therefore, the electronic device recognizes that a touch input is detected in operation 811.

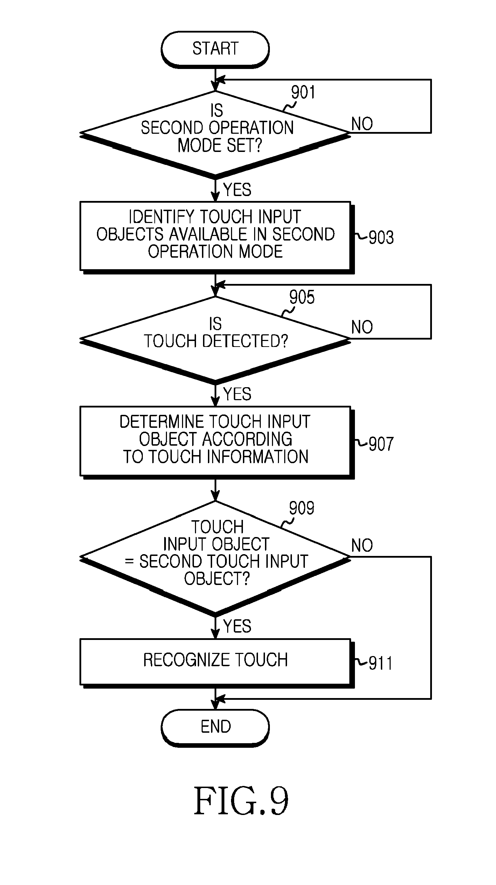

FIG. 9 is a flowchart illustrating a process of recognizing a touch according to an operation mode in a touchscreen based electronic device according to a third embodiment of the present disclosure. In the following description, it is assumed that the electronic device supports a first touch input object, a second touch input object, and a third touch input object.

Referring to FIG. 9, in operation 901, the electronic device identifies whether an operation mode of the electronic device is set to a second operation mode.

When it is determined in operation 901 that the electronic device is set to the second operation mode, the electronic device identifies at least one touch input object available in the second operation mode in operation 903. For example, when the electronic device is set to the second operation mode, the electronic device may identify a glove touch input object as an available touch input object.

In operation 905, the electronic device identifies whether a touch is detected. For example, the electronic device may detect a touch based on a change in the capacity of a touchpad included in the input device 160.

When it is determined in operation 905 that the touch is detected, the electronic device determines a touch input object based on touch information in operation 907. For example, the electronic device may determine a touch input object based on touch information including two or more of the touch sensitivity, the touched area, and the touch duration time of the touch detected in operation 905.

In operation 909, the electronic device identifies whether a touch input object is a second touch input object which is set as an available touch input object in the second operation mode.

When it is determined in operation 909 that the touch input object determined in operation 907 is not the second touch input object, the electronic device recognizes that the touch input object for the touch detected in operation 905 is not available in the second operation mode. Therefore, the electronic device recognizes that a touch is not detected.

When the touch input object determined in operation 907 is the second touch input object, the electronic device recognizes that the touch input object for the touch detected in operation 905 is available in the second operation mode. Therefore, the electronic device recognizes that a touch input is detected in operation 911.

According to the above-described embodiment of the present disclosure, the electronic device may identify touch input objects available in the operation mode of the electronic device before touch detection.

In another embodiment of the present disclosure, the electronic device may identify touch input objects available in the operation mode of the electronic device after touch detection.

According to various embodiments of the present disclosure, an electronic device having a touchscreen determines a touch input object based on two or more of a touch sensitivity, a touched area and a touch duration time, thereby selectively using a touch input object for touch recognition according to an operation mode of the electronic device.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for determining a touch input object in a touchscreen based electronic device, the method comprising:
detecting a touch; and
determining the touch input object based on two or more of a touch sensitivity, a touched area, and a touch duration time of the detected touch.

2. The method of claim 1, wherein the determining of the touch input object comprises determining a glove touch input object as the touch input object for the touch when the touch sensitivity is greater than a first reference sensitivity and less than a second reference sensitivity, and when the touched area for the touch is greater than a first reference area and less than a second reference area,
wherein the second reference sensitivity is greater than the first reference sensitivity, and
wherein the second reference area is greater than the first reference area.

3. The method of claim 2, further comprising:
determining a pen touch input object as the touch input object for the touch when the touch sensitivity of the touch is less than and equal to the first reference sensitivity; and
determining a finger touch input object as the touch input object for the touch when the touch sensitivity of the touch is greater than and equal to the second reference sensitivity.

4. The method of claim 2, further comprising:
determining a pen touch input object as the touch input object for the touch when the touched area of the touch is less than and equal to the first reference area; and
determining a finger touch input object as the touch input object for the touch when the touched area of the touch is greater than and equal to the second reference area.

5. The method of claim 1, further comprising:
after determining the touch input object, recognizing a touch input according to the detected touch based on the touch input object and an operation mode of the electronic device.

6. The method of claim 5, wherein the recognizing of the touch input comprises:
detecting the touch input for the detected touch when the touch input object is comprised in the touch input object for the operation mode; and
restricting the touch input for the detected touch when the touch input object is not comprised in the touch input object for the operation mode.

7. An electronic device comprising:
a touchscreen; and
at least one processor,
wherein the at least one processor is configured to determine a touch input object based on two or more of a touch sensitivity, a touched area, and a touch duration time of a touch when the touch is detected through the touchscreen.

8. The method of claim 1 or the electronic device of claim 7, wherein the touch input object includes one or more of a finger touch input object, a pen touch input object, and a glove touch input object.

9. The electronic device of claim 7, wherein the at least one processor is further configured to determine a glove touch input object as the touch input object for the touch when the touch sensitivity of the touch is greater than a first reference sensitivity and less than a second reference sensitivity, and when the touched area of the touch is greater than a first reference area and less than a second reference area,
wherein the second reference sensitivity is greater than the first reference sensitivity, and
wherein the second reference area is greater than the first reference area.

10. The method of claim 2 or the electronic device of claim 9, wherein the determining of the glove touch input object comprises determining the glove touch input object as the touch input object for the touch when the touch, of which the touch sensitivity is greater than the first reference sensitivity and less than the second reference sensitivity and of which the touched area is greater than the first reference area and less than the second reference area, is maintained continuously for a reference time.

11. The method of claim 10 or the electronic device of claim 10, further comprising determining a pen touch input object as the touch input object for the touch when the touch, of which the touch sensitivity is greater than the first reference sensitivity and less than the second reference sensitivity and of which the touched area is greater than the first reference area and less than the second reference area, is not maintained continuously for the reference time.

12. The electronic device of claim 9, wherein the at least one processor is further configured to:
determine a pen touch input object as the touch input object for the touch when the touch sensitivity of the touch is less than and equal to the first reference sensitivity; and
determine a finger touch input object as the touch input object for the touch when the touch sensitivity of the touch is greater than and equal to the second reference sensitivity.

13. The electronic device of claim 9, wherein the at least one processor is further configured to:
determine a pen touch input object as the touch input object for the touch when the touched area of the touch is less than and equal to a first reference area; and
determine a finger touch input object as the touch input object for the touch when the touched area of the touch is greater than and equal to a second reference area.

14. The electronic device of claim 7, wherein the at least one processor is further configured to recognize a touch input according to the detected touch based on the touch input object and an operation mode of the electronic device.

15. The electronic device of claim 14, wherein the at least one processor is further configured to:
detect the touch input for the detected touch when the touch input object is comprised in the touch input object for the operation mode; and
restrict the touch input for the detected touch when the touch input object is not comprised in the touch input object for the operation mode.
